Europäisches Patentamt

European Patent Office

Office européen des brevets

(11) Publication number: **0 100 364**
**B1**

(12) EUROPEAN PATENT SPECIFICATION

(45) Date of publication of patent specification: **10.12.86**

(51) Int. Cl.⁴: **B 25 B 23/08**

(21) Application number: **82900142.9**

(22) Date of filing: **25.12.81**

(86) International application number:
**PCT/JP81/00412**

(87) International publication number:
**WO 83/02246 07.07.83 Gazette 83/16**

(54) VACUUM HOLDING TYPE AUTOMATIC SCREW FASTENING MACHINE.

(43) Date of publication of application:
**15.02.84 Bulletin 84/07**

(45) Publication of the grant of the patent:
**10.12.86 Bulletin 86/50**

(84) Designated Contracting States:
**DE FR GB**

(56) References cited:
**JP-A-55 096 278**

(73) Proprietor: **Matsushita Electric Industrial Co.,
Ltd.
1006, Oaza Kadoma
Kadoma-shi Osaka-fu, 571 (JP)**

(72) Inventor: **TANAKA, Tamotsu
1-chome 16-ban 3-go Kuzuha Asahi
Hirakata-shi Osaka-fu 573 (JP)**
Inventor: **JO, Yasunori
33-1108, 3-4 Nishi Iwatacho Higashi
Osaka-shi Osaka-fu 578 (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

**Description**

This invention relates to a machine which locates a screw by vacuum force and automatically tightens it. An object of the invention is to provide an automatic screw-tightening machine which obtains a proper tightening force by proper drill bit thrust without damaging a workpiece or a vacuum pipe employed to apply vacuum force and wherein the screw can be tightened to an optional height.

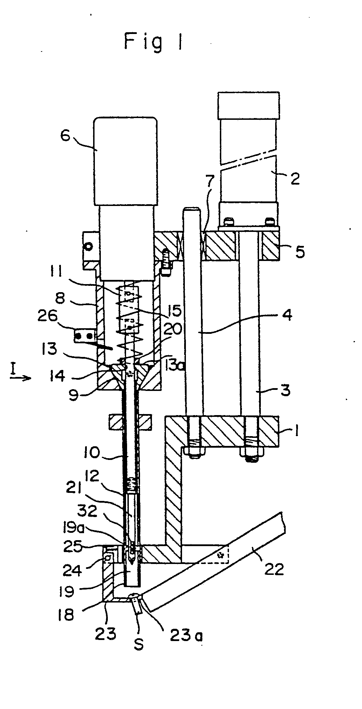

Conventionally, the kind of automatic screwing machine shown in Figs. 1 through 3 has been used.

In Figs. 1 to 3 a fixed bracket member 1 has fixed thereto a piston rod 3 of an hydraulic cylinder 2 and a guide 4. A screw-driver assembly base 5 has fixed at the right hand thereof the cylinder 2, at the left hand a screw-driver power unit 6, and at the central portion a bearing 7 slidably carrying the guide 4. A tapered cylinder 8 forms at the lower portion a female tapered block 9, the female tapered block 9 and screw-driver power unit 6 being in alignment with each other and fixed to the driver base 5. A bit holder 10 is connected with the screw-driver power unit 6 through a joint 11. A vacuum pipe 12 has at the upper end thereof a male tapered block 13 fitted into the female tapered block 9 and having a through bore 14 in alignment with the screw-driver power unit 6 for keeping airtight the vacuum pipe 12 while enabling the bit holder 10 to be slidably movable. A compression spring 15 is set betwen the screw-driver power unit 6 and the upper end of vacuum pipe 12 and biases the male tapered block 13 into permanent engagement with the female tapered block 9 to keep the screw-driver power unit 6 in alignment with the bit holder 10. An inlet 16 is fixed at one end to the side of an upper portion of vacuum pipe 12 and connects at the other end with a tube 17.

When the cylinder 2 is charged with compressed air and the screw-driver power unit 6 starts to lower, air is simultaneously taken in through the tube 17 and upon completion of screw-tightening, the air-take-in is stopped and simultaneously the cylinder 2 operates to lift the unit 6. A screw locating pipe 18 has at its lower portion a bore 19 slightly larger in diameter than the head of a screw S and at the center thereof a bit guide bore 19a. In addition, a bit 21 is aligned with the bit holder 10 and fixed thereto. At the lower end of bracket member 1 are slantwise fixed a pair of chutes 22 (only one of which is shown) which are spaced at an interval somewhat larger than a diameter at a portion of screw S under the neck thereof, the screw S being transferred while hanging one by one. Reference numeral 23 designates a catcher, which is mounted swingably to the bracket member 1 through a spindle 24. A compression spring 25 is fixed above spindle 24 between the catcher 23 and the bracket member 1 to thereby bias the catcher 23 so that its outermost end contacts the end of each chute 22. The catcher 23 provides at its outermost end a U-like-shaped cutout 23a so that the screws S transferred one by one from the chute 22 are caught by the cutout 23a and aligned with the bit 21. In use, where a screw is caught by the catcher 23, and the locating pipe 18 is sucking in air, the bit 19 lowers while rotating so that the screw S is located in the bore 19. Upon further lowering of cylinder 2 in this condition, the pipe 18 stops in contact with a workpiece $W_1$ and when the cylinder 2 further lowers, the screw S perforates an idle bore in the workpiece $W_1$ to screwably tighten in a workpiece $W_2$.

A microswitch 26 fixed to the female tapered cylinder 8 serves as a means of detecting movement of cylinder 8 relative to the pipe 18.

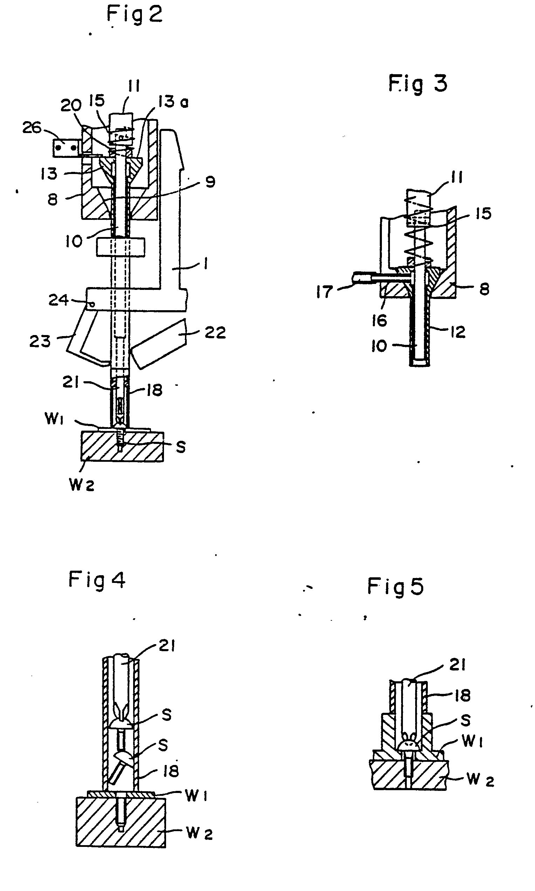

In the case where the screw S is completely tightened as shown in Fig. 2 after screwing from the state in Fig. 1, the locating pipe 18 abuts against the surface of workpiece $W_1$ and microswitch 26 contacts with the upper surface 13a of male tapered block 13, thereby generating a signal. If the screw S is incompletely tightened, the bit 21 is positioned higher with respect to the workpiece $W_1$ than is shown in Fig. 2, whereby the microswitch 26 is not actuated.

In the above construction, the descent pressure of cylinder 2 is transmitted to the bit 21 through the screw-driver power unit 6, joint 11 and bit holder 10 whereby the screw is tightened while pressing the bit under constant pressure. The pressure may be too strong and may deform or break the workpiece, insert the screw slantwise leading to breakage of screw thread, or cause an unstable tightening torque.

In contrast, a pressure which is too weak is liable to disconnect the screw from the bit, whereby the bit rotates and breaks down the head of screw, or the screw cannot follow the tightening speed.

When a locating error or a screw feed error occurs, the bit 21 descends further than normal and the lower end of joint 11 abuts against a collar 20 on the block 13. Therefore, the microswitch 26 is restrained from operation to prevent breakage of the same and also the tip of bit 21 is prevented from entering and drilling into the bore of workpiece $W_1$ to damage it. In this case, however, the locating pipe 18 is subjected to full pressure so that the workpiece may be broken by the pipe 18, or the pipe 18 itself is broken. Also, since the bit 21 projects merely a little from the end of absorption pipe 18, the screw tightening in a recessed workpiece $W_1$ as shown in Fig. 5 and that at the flat surface as shown in Fig. 2 could not be performed by the same machine.

In a case where the workpiece $W_1$ shifts so that the screw does not fit into the threaded bore causing improper screw-tightening, the bit stays within the locating pipe while engaging with crossed grooves on the head of the screw. In this case, if a subsequent screw-tightening is intended to be carried out, another screw may be located in the locating pipe as shown in Fig. 4, such other screw not being engaged by the bit, resulting in an improper screw-tightening and possible damage to the locating pipe.

Also, for exchange of the bit the screw-driver power unit 6 must be released from the driver-base 5, the driver unit and the bit 21 must be removed upwardly, and the bit screwed to the bit holder be exchanged. Hence, the exchange of the bit takes much time because the wiring for the power unit must be refixed each time.

It is an object of the present invention to overcome the problems described above.

The automatic screw-tightening machine of the invention is so constructed that a cushion portion is removed from between the screw-driver rotational drive source and a bit holder so that an air cylinder for vertically moving the screw-driver unit serves also as a cushion mechanism for the bit. The descent pressure of air cylinder is desirably adjustable by an air regulator to thereby obtain proper bit thrust.

Preferably the stroke of the vacuum pipe on the bit holder is larger than the distance between the lowermost end of the locating pipe and the bit tip in the inoperative position so that the bit tip can project from the locating pipe during screw-tightening whereby workpieces having flat and recessed surfaces can be used without any adjustment of the driver stroke and with no fear of damaging the workpiece, a microswitch for controlling operation and the locating pipe.

Furthermore, the driver holding position is adjusted to optionally set the bit in position so that a distance between the lowermost end of the locating pipe and the bit tip corresponds to a length of one screw to be tightened, thereby locating one screw only.

In the case that no screw is located for tightening the bit enters at its tip into a threaded bore of a workpiece, but the lowering of the bit is detected to indicate an error of no screw.

Further, preferably at said coupler or said bit holder in the vicinity of said coupler is formed a bore, through which a rod for restraining the rotation of said drive unit is insertable, and a portion of said lifting unit enclosing said coupler or a bore for said bit holder has formed a cutout through which the rod is insertable into said bore from the exterior for use in exchanging the bit. This permits exchange of the bit without extensive dismantling of the machine.

Brief description of the drawings:

Fig. 1 is a sectional view exemplary of a conventional automatic screw-tightening machine,

Fig. 2 is a view explanatory of the machine in Fig. 1, showing a screw tightening condition,

Fig. 3 is a sectional view of a principal portion of the machine in Fig. 1 when viewed in the direction of the arrow I,

Fig. 4 is a view explanatory of a poor location condition in Fig. 1,

Fig. 5 is a view explanatory of screw-tightening condition for a recessed workpiece,

Fig. 6 is a front view of an embodiment of an automatic screw-tightening machine of the invention,

Fig. 7 is an enlarged sectional view of a principal portion of the Fig. 6 embodiment, showing an external cylinder only in condition of being shifted at an angle of 90°,

Fig. 8 is an enlarged sectional view of a principal portion taken in the direction of the arrow I in Fig. 6,

Figs. 9 and 10 are enlarged views of a principal portion in Fig. 6, and

Fig. 11 is an hydraulic circuit diagram of the embodiment of the invention.

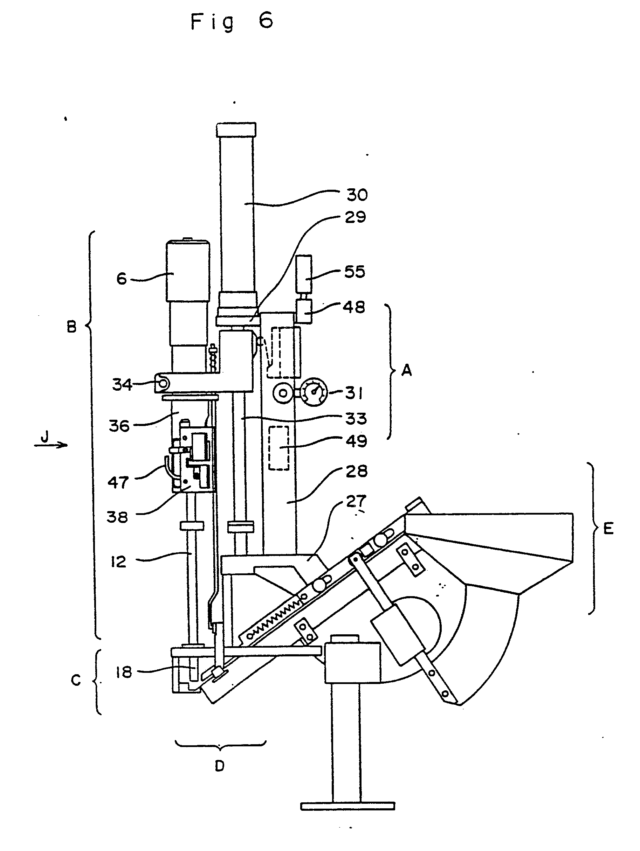

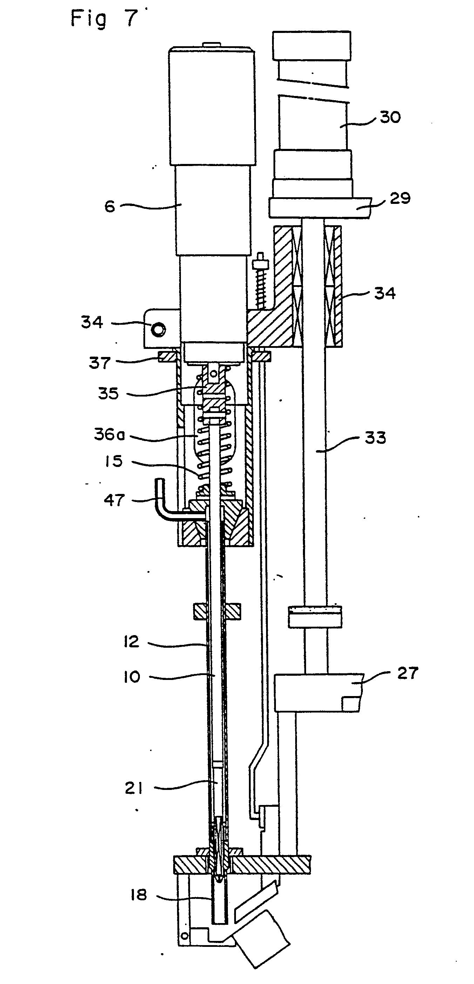

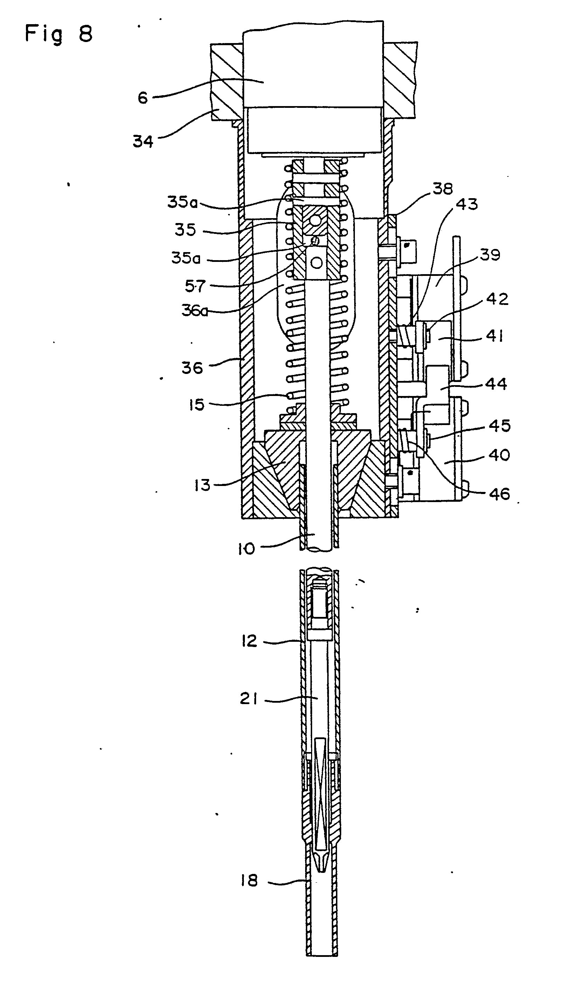

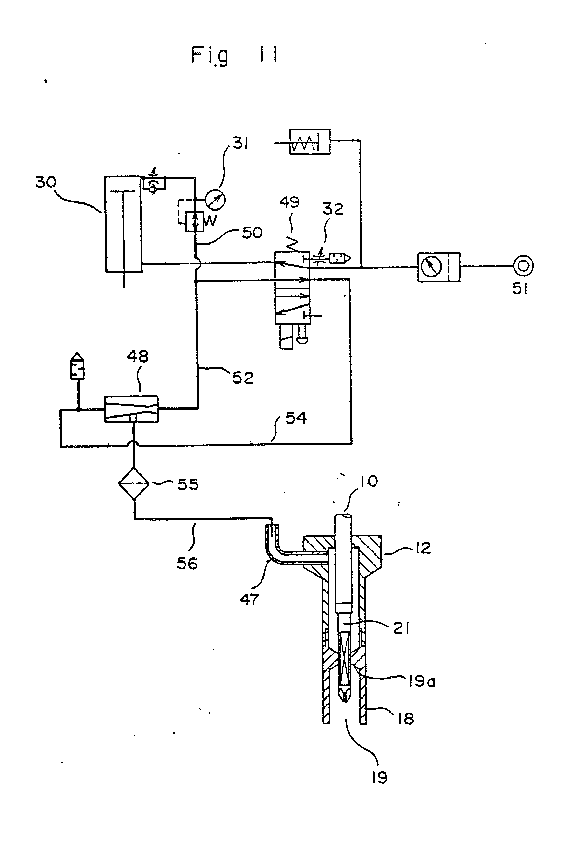

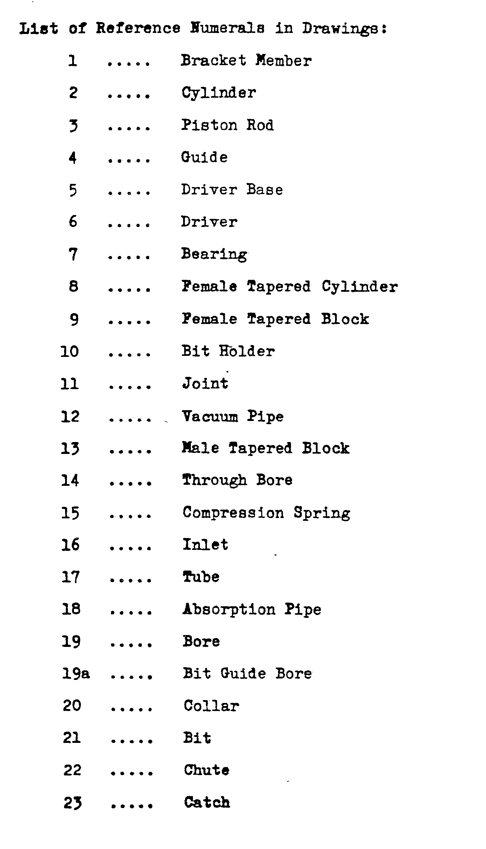

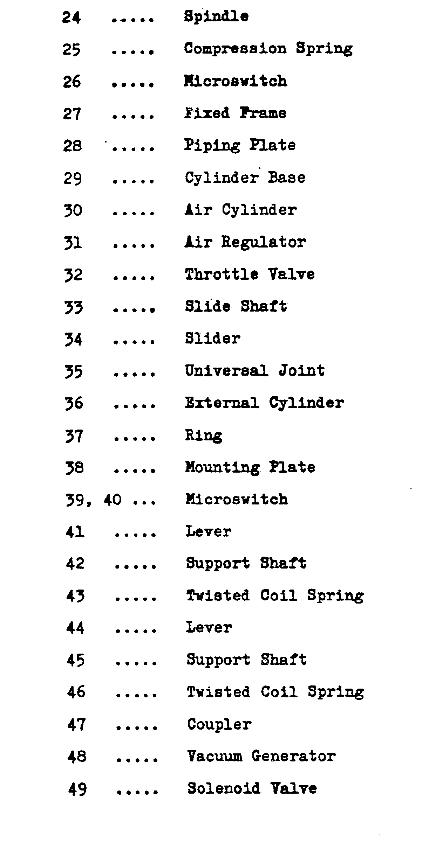

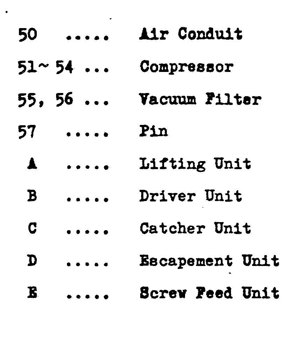

In Figs. 6 through 11 reference A designates a lifting unit, B designates a driver unit, C designates catcher unit, D designated escapement unit, and E designates a screw feed unit, so that screws fed in line therewith are caught by the catcher unit C and located to be held by the driver unit B lowering from the lifting unit A, thereby to be screw-tightened.

A fixed frame 27 has erected thereon a plate 28 and at the upper portion thereof is fixed a cylinder base 29 of an air cylinder 30, the descent pressure of air cylinder 30 being adjustable by an air regulator 31 and the descent speed of the same adjustable by an exhaust air throttle valve 32. A slide shaft 33 is fixed at its ends to the fixed frame 27 and cylinder base 29. A slider 34 is connected with the cylinder 30 and is slidable on the slide shaft 33. A driver power unit 6 is mounted on the axis of the slider 34. A universal joint 35 connects the driver power unit 6 with the bit holder 10 and has a bore 35a perforating the joint 35 perpendicularly to the axis thereof. A bit 21 is screwably connected to the lwoermost end of a bit holder 10. An external cylinder 36 is fixed to the slider 34 through a ring 37, the external cylinder 36 having at its upper end a bore of diameter large enough to receive therein the driver power unit 6, and having a through bore 36a large enough so that the through bore 35a is fully visible. A mounting plate 38 is screwably fixed to the external cylinder 36 and fixedly supports microswitches 39 and 40. A lever 41 is swingable around a support shaft 42, the lever 41 actuating the microswitch 39 through a twisted coil spring 43. A lever 44 pivots around a support shaft 45 and actuates the microswitch 40 through a twisted coil spring 46. A coupler 47 is fixed to a vacuum pipe 12, connected to a vacuum generator 48, and is in a position to abut against the lever 41.

In the above construction, a starting signal energizes a solenoid valve 49 so that air enters an air conduit 50 from an air compressor 51 to thereby lower the driver unit B. At the same time, air also enters into an air conduit 52 so as to be taken into an end of the location pipe by the vacuum generator 48 of an ejector system, thereby locating the screw stationary at the catcher 23, the screw located in the locating pipe 18 engaging at its head with the bit 21 rotating within the pipe 18. The pipe 18, when further lowered, abuts against the workpiece $W_1$ and stops, but the bit 21 further lowers to tighten the screw with the workpiece W.

Upon completing the screw-tightening, a tightening finish signal stops rotation of driver 6, the solenoid valve 49 is deenergized, the air compressor 51 communicates with an air conduit 53, and the driver unit rises, at which time the compressed air used for lowering and remaining in the cylinder 30 is exhausted from the pipe 18 via the air conduit 50, solenoid valve 49, air conduit 54, vacuum generator 48, vacuum filter 55, air conduit 56 and vacuum pipe 12. Hence, the vacuum generator 48 is restrained rapidly from absorption and dust or the like absorbed is discharged, especially fine particles attached to the vacuum generator 48 being removed therefrom.

For the screw-tightening, the bit thrust relates to stability of tightening force. In brief, if the downwards pressure, as abovementioned, is too small in comparison with the tightening force, the bit is liable to disengage from the screw, thereby breaking down the head of the screw. On the other hand, if the pressure is too large, the workpiece may be deflected or broken, the screw may enter slantwise into the locating pipe, or the tightening torque may be not stable.

This embodiment eliminates the cushion portion from between the driver 6 of the rotational drive source and the bit 21 so that the air cylinder 30 for lifting the driver unit receives thrust of bit 21 and the pressure for lowering the air cylinder 30 is optionally adjusted by the air regulator 31, thereby obtaining proper bit thrust. Hence, when in a range of stroke of the driver after locating of a screw, adjustment is not required to tighten the screw height and with accuracy.

Furthermore, since the distance between the universal joint 35 and the male tapered block 13 is made larger than that between the lowermost end of pipe 18 and the tip of bit 21 and the microswitch 39, which detects the relative position of bit 21 to the pipe 18, is switched by the lever 41 and upon completing the screw-tightening, the lever 41 is adapted to disengage the microswitch 39, there is no fear of damaging the microswitch 39 even when the bit 21 with no screw projects from the lowermost end of pipe 18. Hence, the screw-tightening may be performed not only on a flat surface but also on a recessed surface facing where the pipe 18 cannot enter the recess and the bit 21 projects from the lower end of pipe 18. Such function of tightening the screw at an optional height without any adjustment of the machine on a plane surface, or on a recessed surface, is largely effective in the case that a multi-point positioning apparatus, for example a XY table of the like, carrying this screw-tightening machine can carry out the screw-tightening under various conditions.

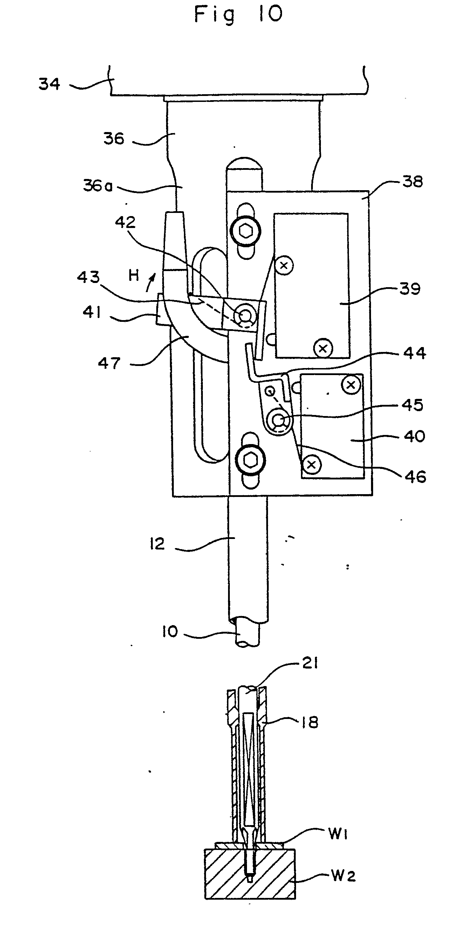

Also, when the bit with no screw screws forward, the bit 21, as shown in Fig. 10, enters the threaded bore at the workpiece W to thereby lower more than usual during screw-tightening, whereby the lever 41 swings by the coupler 47 in the direction of the arrow H to turn off the microswitch 39 and the lever 44 also swings to turn off the microswitch 40 which is usually on by the lever 44. When the turn-off of microswitch 40 detects no screw, the bit 21 immediately stops its rotation to lift the driver unit, thereby enabling elimination of damage to the work and of a waste of time.

In a case where the workpiece, during the screwing, shifts in position so that the screw is not tightened, the screw and bit 21 strongly bite each other, whereby the screw is not removed usually by the exhaust air, but returns together with the bit 21 into the location pipe 18. Next, upon lowering the head as it is, the screw on the catcher 23 is not located because there is no space for receiving another screw within the pipe 18 and is thereby removed. Then, the screw already within the pipe 18 lowers together with the bit 21 and is reliably tightened.

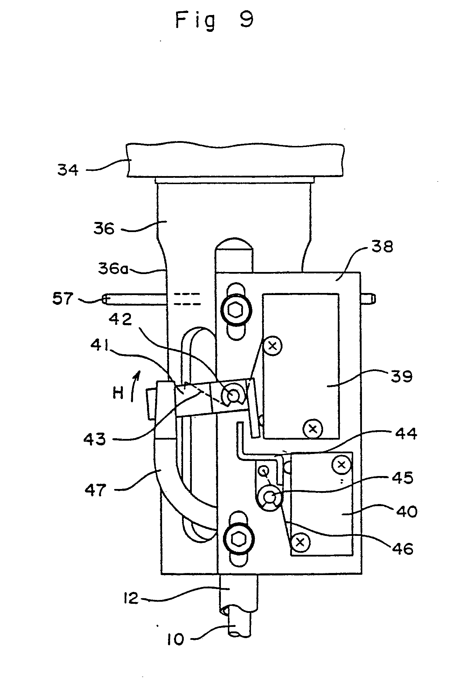

Furthermore, in exchange of bit 21, a pin 47, as shown in Fig. 9, is inserted through the through-bore 36a at the external cylinder 36 and through-bore 35a at the universal joint 35 to thereby block rotation of bit holder 10 and lower the head, loosen and remove the pipe 18 coupled with the vacuum pipe 12, and turn the bit 21 by a monkey wrench or the like to release its screw-coupling with the bit holder 10. Thus, such simple method can often mount or dismount the bit necessary for exchange.

As seen from the above, the automatic screw-tightening machine of the invention can reliably carry out screw-tightening by proper bit thrust and without any adjustment for screwing plane surfaces or recessed surfaces. The machine of the invention, when carried on a multi-point positioning apparatus, for example an XY table, is largely effective for use as a flexible fastener.

## Claims

1. An automatic screw-tightening machine comprising means (D, E) for feeding screws in line one at a time to a catcher unit (C) for catching one screw at a time, and a lifting unit (A) for upwardly and downwardly moving a driver unit (B) by means of an actuator comprising an air cylinder (30) capable of setting the descent pressure and descent speed for said drive unit, said driver unit (B) comprising a rotational drive source (6) fixed to a slider (34) connected to said lifting unit (A), a bit holder (10) for transmitting rotation of said rotational drive source to a bit (21), a vacuum pipe (12) which encloses said bit holder, is slidable thereon, and communicates at the upper end with a vacuum generating source (47, 48), a coupler (35) connecting said rotational drive source and bit holder, and a screw locating pipe (18) enclosing the bit (21) and communicating with the lower end of said vacuum pipe, and having an inner diameter large enough to receive the head of screw to be located, characterized in that the bit (21), bit holder (10), coupler (35), rotational drive source (6) and lifting unit (A) are so interconnected that a shock imposed on the tip of said bit is buffered by said air cylinder only (30).

2. A machine as claimed in claim 1, characterized in that said coupler or said bit holder in the vicinity of said coupler is formed a bore (35a), through which a rod (57) for restraining the rotation of said drive unit is insertable, and at a portion (36) of said lifting unit enclosing said coupler or a bore for said bit holder is formed a cutout (36a) through which the rod (57) is insertable into said bore from the exterior for use in exchanging the bit (21).

3. A machine as claimed in claim 1, characterized in that the stroke of said vacuum pipe (12) slidable on said bit holder (10) is adapted to be larger than a distance between the lowermost end of said locating pipe (18) and the tip of said bit (21) in the inoperative position.

## Patentansprüche

1. Automatische Schraubenbefestigungsmaschine mit einer Einrichtung (D, E) zum Zuführen von Schrauben in Linie zugleich zu einer Greifeinheit (C) zum gleichzeitigen Ergreifen einer Schraube, einer Anhebeeinheit (A) zum Aufwärts- und Abwärtsbewegen einer Antreibseinheit (B) durch eine Stelleinrichtung mit einem Luftzylinder (30), der in der Lage ist, den Abwärtsdruck und die Abwärtsgeschwindigkeit der Antriebseinheit zu bestimmen, wobei die Antriebseinheit (B) umfaßt einen an einem mit der Anhebeeinheit (A) verbundenen Schiebeschlitten (34) befestigten Drehantreib (6), einen Schraubklingenhalter (10) zum übertragen der Drehbewegung des Drehantriebs auf eine Schraublinge (21), ein Unterdruckrohr (12), das den Schraubklingenhalter umschließt, auf diesem verschiebbar ist und an dem oberen Ende mit einer Unterdruckquelle (47, 48) in Verbindung steht, eine den Drehantrieb und den Schraubklingenhalter verbindende Kupplung (35), ein die Schraublinge (21) umgebendes Schraubenpositionshalterohr (18), das mit dem unteren Ende des Unterdruckrohres verbunden ist und einen Innendurchmesser aufweist, der groß genug ist, den Kopf einer anzuordnenden Schraube aufzunehmen, dadurch gekennzeichnet, daß die Schraubklinge (21), der Schraubklingenhalter (10), die Kupplung (35), der Drehantrieb (6) und die Anhebeeinheit (A) derart miteinander verbunden sind, daß ein auf die Spitze der Schraubklinge (21) ausgeübter Stoß allein durch den Luftzylinder (30) gepuffert wird.

2. Maschine nach Anspruch 1, dadurch gekennzeichnet, daß in der Kupplung oder im Schraubklingenhalter in der Nähe der Kupplung eine Bohrung (35a) ausgebildet ist, durch welche hindurch eine Stange (57) zum Unterbinden der Drehung der Antriebseinheit einsetzbar ist, und an einem Teil (36) der die Kupplung oder eine Bohrung für den Schraubklingenhalter umschließenden Anhebeeinheit ein Durchbruch (36a) ausgebildet ist, durch welchen hindruch die Stange (57) von außen zum Auswechseln der Schraubklinge (21) in die Bohrung eingesetzt werden kann.

3. Maschine nach Anspruch 1, dadurch gekennzeichnet, daß der Hub des auf dem Schruabklingenhalter (10) verschiebbaren Unterdruckrohres (12) derart ausgewählt ist, daß er größer ist als der Abstand zwischen dem untersten Ende des Positionshalterohres (18) und der Spitze der Schraubklinge (21) in Nichtbetreibsstellung.

## Revendications

1. Machine à visser automatique, comprenant des dispositifs (D, E) pour amener des vis en une rangée et pour les distribuer une à une à une unité de préhension (C) conçue pour attraper une vis à la fois, ainsi qu'une unité de relevage (A) pour déplacer vers le haut et vers le bas une unité de commande (B) au moyen d'un organe de manoeuvre comprenant un vérin pneumatique (30) permettant le réglage de la pression d'abaissement et de la vitesse d'abaissement de l'unité de commande, l'unité de commande (B) comprenant une source d'entraînement en rotation (6) fixée à un coulisseau (34) qui est relié à l'unité de relevage (A), un porte-outil (10) pour transmettre la rotation de la source d'entraînement en rotation à un outil (21), un tube aspirant (12) qui renferme ce porte-outil, peut coulisser sur celui-ci et communique à l'extrémité supérieure avec une source de production du vide (47, 48), un élément d'accouplement (35) reliant la source d'entraînement en rotation et le porte-outil, de même qu'un tube de positionnement de vis (18), renfermant l'outil (21) et communiquant avec l'extrémité inférieure du tube aspirant, le tube de positionnement possédant un diamètre intérieur suffisamment grand pour recevoir la tête d'une vis à positionner, caractérisée en ce que l'outil (21), le porte-outil (10), l'élément d'accouplement (35), la source d'entraînement en rotation (6) et l'unité de relevage (A) sont reliés entre eux de manière qu'un choc appliqué au bout de l'outil soit seulement amorti par le vérin pneumatique (30).

2. Machine selon la revendication 1, caractérisée en ce que l'élément d'accouplement, ou le porte-outil à proximité de cet élément, présente ou trou transversal (35a) dans lequel on peut insérer une tige (57) pour bloquer la rotation de l'unité de commande et une partie (36) de l'unité de relevage, entourant l'élément d'accouplement, ou un alésage pour le porte-outil, est pourvue d'une découpe (36a) par laquelle la tige (57) peut être insérée de l'extérieur dans le trou transversal en vue du remplacement de l'outil (21).

3. Machine selon la revendication 1, caractérisée en ce que la course du tube aspirant (12), monté coulissant sur le porte-outil (10), est adaptable pour pouvoir être plus grande que la distance entre l'extrémité inférieure du tube de positionnement (18) et le bout de l'outil (21) en position de repos.

Fig 1

Fig 2

Fig 3

Fig 4

Fig 5

Fig 6

0 100 364

3

Fig 7

0 100 364

4

Fig 8

Fig 9

## Fig 10

Fig 11

**List of Reference Numerals in Drawings:**

| | | |
|---|---|---|
| 1 | ..... | Bracket Member |
| 2 | ..... | Cylinder |
| 3 | ..... | Piston Rod |
| 4 | ..... | Guide |
| 5 | ..... | Driver Base |
| 6 | ..... | Driver |
| 7 | ..... | Bearing |
| 8 | ..... | Female Tapered Cylinder |
| 9 | ..... | Female Tapered Block |
| 10 | ..... | Bit Holder |
| 11 | ..... | Joint |
| 12 | ..... | Vacuum Pipe |
| 13 | ..... | Male Tapered Block |
| 14 | ..... | Through Bore |
| 15 | ..... | Compression Spring |
| 16 | ..... | Inlet |
| 17 | ..... | Tube |
| 18 | ..... | Absorption Pipe |
| 19 | ..... | Bore |
| 19a | ..... | Bit Guide Bore |
| 20 | ..... | Collar |
| 21 | ..... | Bit |
| 22 | ..... | Chute |
| 23 | ..... | Catch |

| | | |
|---|---|---|
| 24 | ..... | Spindle |
| 25 | ..... | Compression Spring |
| 26 | ..... | Microswitch |
| 27 | ..... | Fixed Frame |
| 28 | ..... | Piping Plate |
| 29 | ..... | Cylinder Base |
| 30 | ..... | Air Cylinder |
| 31 | ..... | Air Regulator |
| 32 | ..... | Throttle Valve |
| 33 | ..... | Slide Shaft |
| 34 | ..... | Slider |
| 35 | ..... | Universal Joint |
| 36 | ..... | External Cylinder |
| 37 | ..... | Ring |
| 38 | ..... | Mounting Plate |
| 39, 40 | ... | Microswitch |
| 41 | ..... | Lever |
| 42 | ..... | Support Shaft |
| 43 | ..... | Twisted Coil Spring |
| 44 | ..... | Lever |
| 45 | ..... | Support Shaft |
| 46 | ..... | Twisted Coil Spring |
| 47 | ..... | Coupler |
| 48 | ..... | Vacuum Generator |
| 49 | ..... | Solenoid Valve |

50      .....    Air Conduit

51~ 54 ...    Compressor

55, 56 ...    Vacuum Filter

57      .....    Pin

A      .....    Lifting Unit

B      .....    Driver Unit

C      .....    Catcher Unit

D      .....    Escapement Unit

E      .....    Screw Feed Unit